# FASCICULE DE BREVET EUROPEEN

(11) **EP 1 348 195 B1**
(45) Date de publication et mention de la délivrance du brevet: **28.07.2004**
(21) Numéro de dépôt: 01999914.3
(22) Date de dépôt: 05.12.2001
(51) Int. Cl.: G06K 7/08

(54) **DISPOSITIF D'ANTENNES POUR LA LECTURE D'ETIQUETTES ELECTRONIQUES ET SYSTEME INCLUANT UN TEL DISPOSITIF**
ANTENNENVORRICHTUNG ZUR LESUNG ELEKTRONISCHER ETIKETTEN UND SYSTEM MIT EINER SOLCHEN VORRICHTUNG
ANTENNAE DEVICE FOR READING ELECTRONIC LABELS AND SYSTEM COMPRISING SAME

(30) Priorité: 05.12.2000 FR 0015758
(43) Date de publication de la demande: 01.10.2003
(73) Titulaire: GEMPLUS, 13420 Gémenos (FR)
(72) Inventeur: MARTIN, Philippe, F-21200 BEAUNE (FR); PIC, Pierre, F-13600 La Ciotat (FR)
(86) Numéro de dépôt international: PCT/FR2001/003833
(87) Numéro de publication internationale: WO 2002/047015

(56) Documents cités:
- EP-A- 0 593 131
- WO-A-97/49076
- US-A- 4 700 197

## Description

L'invention concerne la lecture d'étiquettes électroniques dites "tags", d'identification de radiofréquences (« Radio Fréquence Identification » ou « RFID » en anglais).

Une étiquette électronique comporte une puce et une interface d'entrée-sortie.

L'antenne est de petite dimension par rapport aux dimensions de l'étiquette électronique.

L'étiquette électronique est lue (ou écrite) par un lecteur qui dispose d'une antenne de lecture qui réalise un couplage électromagnétique avec l'antenne de l'interface d'entrée-sortie.

Pour que le couplage soit suffisant malgré les petites dimensions de l'antenne de l'étiquette, le lecteur doit être proche de l'étiquette.

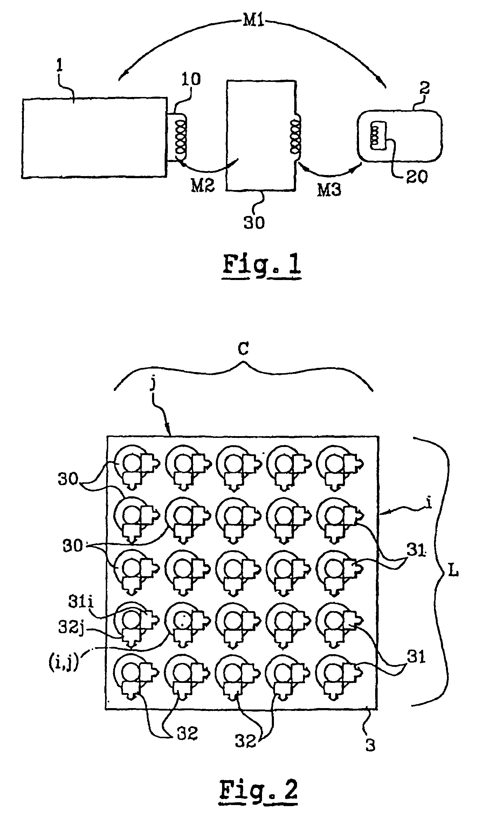

Le document W09749076 (figure 1) consiste à utiliser entre l'antenne 10 du lecteur 1 et l'antenne 20 de l'étiquette électronique 2, une antenne auxiliaire passive 30 parasitique qui entre en résonance à une fréquence donnée sous l'action d'un signal radiofréquence. Lorsqu'elle est ainsi accordée sur la fréquence donnée, cette antenne auxiliaire passive 30 permet de renforcer le couplage électromagnétique M1 entre le lecteur 1 et l'étiquette électronique 2, en focalisant l'éclairage électromagnétique de l'antenne 10 du lecteur 1 sur l'antenne 20 de l'étiquette électronique 2. Ce renforcement est obtenu par couplage électromagnétique M2 entre l'antenne 10 du lecteur et l'antenne auxiliaire passive 30 et par couplage électromagnétique M3 entre l'antenne passive 30 et l'antenne 20 de l'étiquette électronique.

Le document EP0593131 décrit un système électronique de recherche et de contrôle d'admission de personnes, destinés aux sports d'hiver. Des zones de passage comportent au moins un dispositif d'interrogation conçu pour générer un champ d'interrogation, à une fréquence prédéterminée ; Des personnes sont équipées de répondeurs électroniques passifs (tels que des étiquettes électroniques) comportant un circuit résonant réglé sur la fréquence prédéterminée et des moyens actifs pour générer un signal de code lorsque le répondeur est situe dans le champ d'interrogation, ce signal pouvant alors être reconnu par le dispositif d'interrogation. Le dispositif d'interrogation est un émetteur - récepteur comprenant une antenne et un commutateur destiné à commuter l'antenne de l'émetteur vers le récepteur des que l'émission est terminée. L'émission induit un champ électromagnétique dans lé circuit résonant du répondeur ; lorsque l'émission cesse, le circuit résonant du répondeur continue un peu à générer un champ électromagnétique L'émetteur - récepteur alors en position détectrice, peut détecter ce champ électromagnétique.

Le document US4700197 décrit un système d'antenne adaptatif pour agencements de communication avec des mobiles. La directivité et le pointage du faisceau de l'antenne peuvent être commandes électroniquement à la fois dans le plan horizontal et dans le plan vertical. L'antenne présente peu de pertes dans les basses fréquences radio et fonctionne pour une relativement grande largeur de bande. Elle comporte notamment un réseau d'éléménts parasitiques perpendiculaires à la masse mais électriquement isolés de celle-ci. Des commutateurs permettent cependant de relier électriquement les éléments parasitiques à la masse : ils peuvent alors être rendus hautement réflecteurs et permettre ainsi de commander le diagramme de rayonnement de l'antenne. On ne retrouve pas dans ce document un dispositif d'antennes pour la lecture d'étiquettes électroniques, ni d'antennes passives.

Le document W09749076 décrit un système de télémétrie et d'identification. Une antenne de l'étiquette est placée à proximité d'une antenne parasitique couplée à l'antenne de l'interrogateur et à celle de l'étiquette de manière à renforcer le transfert de puissance entre l'interrogateur et l'étiquette. Ce document ne prévoit pas qu'une antenne passive soit commandée par au moins un moyen de commande. Pour lire de nombreuses étiquettes électroniques regroupées dans la même zone de lecture du lecteur, il faut multiplier ces antennes passives.

Mais les antennes passives, alors proches les unes des autres vont se gêner mutuellement.

On peut aussi utiliser autant d'antennes actives que d'étiquettes. Cette multiplication est coûteuse car elle multiplie aussi les commandes de gestion des radiofréquences d'émission et de réception de ces antennes actives.

Le but de l'invention est donc de permettre de lire de nombreuses étiquettes électroniques regroupées dans la même zone de lecture du lecteur, à un coût raisonnable.

A cet effet, l'invention a pour objet un dispositif et un système selon les revendications.

D'autres particularités et avantages de l'invention apparaîtront clairement à la lecture de la description faite à titre d'exemple non limitatif et en regard des dessins annexés sur lesquels :
- la figure 1 déjà décrite illustre schématiquement un système de couplage électromagnétique entre un lecteur et une étiquette électronique, renforcé par une antenne auxiliaire passive,
- la figure 2 est une représentation schématique d'une matrice d'antennes passives selon un mode de réalisation de l'invention,
- les figure 3a) et 3b) illustrent schématiquement un exemple d'étiquette électronique intégrée à un tube d'analyse de prélèvements,
- la figure 4 représente schématiquement un système de lecture de l'étiquette électronique d'un tube,
- la figure 5 représente schématiquement une clayette de rangement de tubes,
- la figure 6 représente schématiquement un cas d'alimentation d'un témoin lumineux par une deuxième antenne passive.

Dans le cas de la figure 1, l'antenne passive 30 est constamment en état de marche bien qu'elle ne résonne qu'en fonction du signal radiofréquence émis par l'antenne 10. Elle n'est pas commutée selon un mode marche ou arrêt.

Dans un mode de réalisation préférentiel d'un système selon l'invention représenté figure 2, les antennes passives 30 sont organisées selon une matrice 3 de L lignes et C colonnes, chacune de ces antennes 30 étant repérées par ses coordonnées (i,j), i variant de 1 à L , j variant de 1 à C.

Sur la figure 2, chacune des coordonnées (i,j) repère une antenne 30 ; mais la matrice 3 peut comporter des trous, certaines coordonnées (i,j) ne repérant pas d'antenne 30. Dans un autre mode de réalisation, les antennes passives peuvent aussi être organisées selon un volume.

Afin de pouvoir sélectionner l'antenne passive 30 que l'on souhaite rendre apte à résonner, chacune de ces antennes passives 30 est commandée par un commutateur.

On considère le système représenté figure 2. Chaque ligne d'antennes passives est commandée par un moyen de commande 31ᵢ, préférentiellement un interrupteur analogique à commande logique ; chaque colonne d'antennes passives est commandée par un moyen de commande 32ⱼ, de préférence également un interrupteur analogique à commande logique. On retiendra par la suite, comme exemple de moyens de commande, ces interrupteurs analogiques à commande logique. Finalement, chaque antenne passive (i,j) est commandée par deux interrupteurs 31ᵢ et 32ⱼ. Lorsque l'interrupteur 31ᵢ et l'interrupteur 32ⱼ sont fermés, l'antenne passive (i,j) est prête à résonner sous l'action du signal radiofréquence émis par l'antenne 10 du lecteur.

Ainsi L+C interrupteurs analogiques à commande logique suffisent à commander LxC antennes passives au lieu des LxC commutateurs a priori nécessaires.

Il en résulte un gain financier d'autant plus considérable que le nombre d'antennes passives est important.

On va à présent décrire un exemple d'application de l'invention à des unités de stockage à basse température de prélèvements pour analyses.

Lors d'interventions chirurgicales par exemple, des fragments de tissus d'organes sont prélevés puis placés dans des tubes et conservés à très basse température en vue de leur analyse ultérieure.

De manière à identifier chaque tube, le marquage habituel par un code barre imprimé sur une étiquette, est avantageusement remplacé par une étiquette électronique. En effet, les étiquettes habituelles soumises aux conditions difficiles des températures cryogéniques, tombent parfois au fur et à mesure des diverses manipulations des tubes.

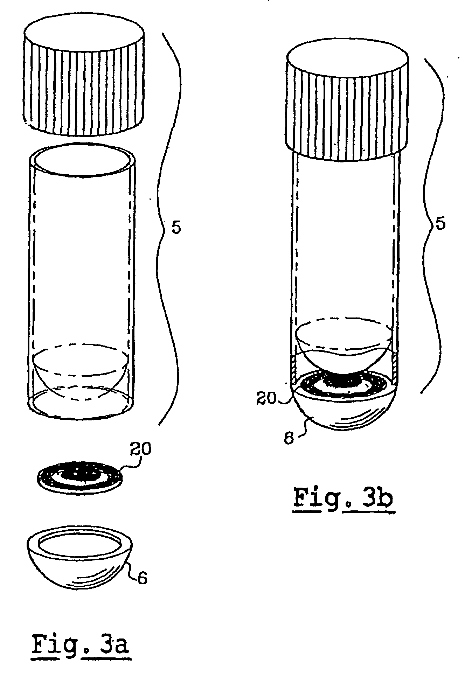

Comme représenté figures 3a) et 3b), cette étiquette électronique comprenant une antenne 20 est intégrée dans un module 6 fixé au tube 5 par exemple par injection ou placé dans une coupelle soudée à la base du tube 5.

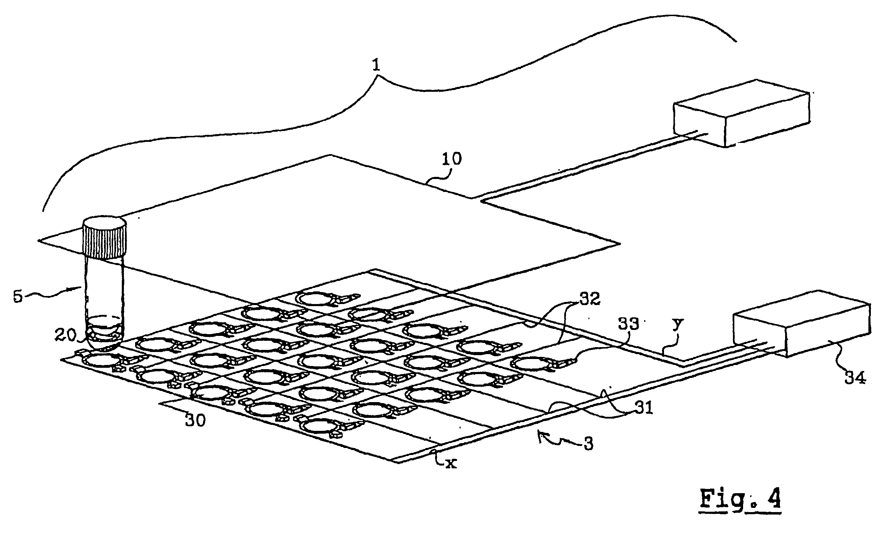

Sur la figure 4 est représenté un système de lecture de l'étiquette électronique du tube 5 au moyen de son antenne 20 : il comprend l'antenne 10 du lecteur 1 et une matrice 3 d'antennes passives 30.

Telle que représentée sur la figure 4, l'antenne 10 est suffisamment grande pour être placée autour de l'ensemble des tubes 5. Cette antenne 10 peut être remplacée par une antenne plus petite que l'on déplace ou par plusieurs antennes.

La matrice 3 comprend un dispositif de commande 34 des L interrupteurs 31 situés selon un axe X et des C interrupteurs 32 situés selon un axe Y.

On va considérer par exemple le tube 5 situé vis-à-vis de l'antenne passive 30 repérée par les coordonnées (L,C).

L'étiquette du tube 5 est lue en réalisant un couplage entre l'antenne 10 du lecteur 1 et l'antenne passive 30 repérée par ses coordonnées (L,C) et par un couplage entre cette antenne 30 et l'antenne 20. L'antenne passive 30 en (L,C) est mise en oeuvre en fermant 1 interrupteur 31_{L} situé sur l'axe X et l'interrupteur 32_{C} situé sur l'axe Y.

Une autre antenne passive 30 située en (1,1) par exemple aurait tout aussi bien pu être utilisée pour lire l'étiquette du tube correspondant, placé au-dessus de cette antenne 30.

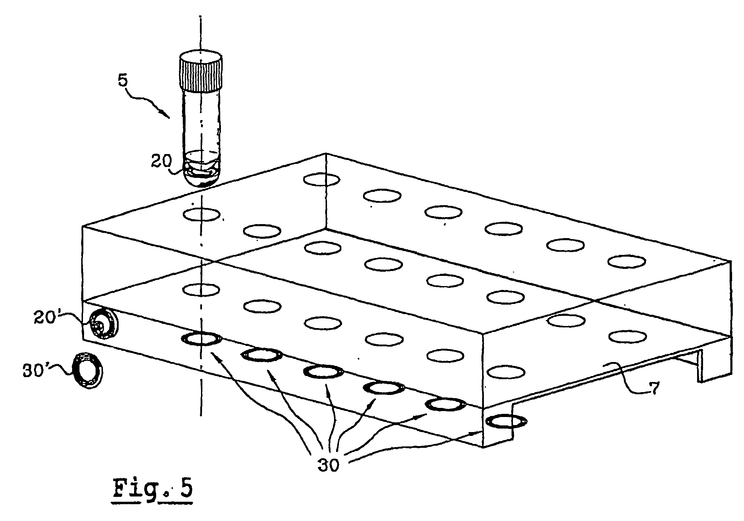

Comme représenté figure 5, les tubes 5 sont généralement placés dans des clayettes 7. Afin de lire au moyen des antennes 20, les étiquettes électroniques fixées aux tubes 5, une matrice d'antennes passives 30 peut être glissée sous chaque clayette 7. Chaque clayette 7 peut également intégrer une telle matrice.

On peut également repérer chaque clayette 7 par une étiquette électronique comportant une antenne 20' que l'on peut lire au moyen d'une antenne passive 30'.

Dans l'exemple qui vient d'être décrit, à chaque étiquette électronique est associée une antenne passive 30. On peut cependant prévoir une antenne passive 30 pour plusieurs étiquettes électroniques et donc plusieurs tubes 5 dans notre exemple. On peut grouper par exemple 4 ou 9 tubes, qui se trouveront alors dans le même champ électromagnétique d'une même antenne passive 30.

La lecture de chacun de ces 4 ou 9 tubes fera alors appel à un procédé d'anticollision. De tels procédés ont été développés pour permettre à un lecteur de cartes à puce sans contact de résoudre le problème qui se présente lorsque plusieurs cartes se présentent simultanément dans le champ du lecteur.

Dans un mode de réalisation préférentiel de l'invention, on adjoint au dispositif d'antennes passives 30, un dispositif de visualisation de l'antenne passive utilisée.

Dans le cas où les antennes passives sont organisées en une matrice, on adjoint une matrice de visualisation de manière à indiquer visuellement la position (i,j) de l'antenne passive utilisée et donc de l'étiquette électronique en cours de lecture ou écriture.

La matrice de visualisation est constituée de témoins lumineux 33 représentés figure 4. Le témoin lumineux correspondant à l'antenne passive (i,j) s'allume lorsque cette antenne est activée.

Le témoin lumineux 33 associé à l'antenne passive 30, constitué par exemple d'une diode ("Light Electroluminescent Diode" ou "LED" en anglais) peut être connecté et commandé par les deux interrupteurs commandant l'antenne passive correspondante : la diode s'allume lorsque les deux interrupteurs 31ᵢ et 32ⱼ sont fermés.

Selon un autre mode de réalisation, le témoin lumineux 33 associé à l'antenne passive 30 n'est pas connecté à l'antenne passive 30. Dans un premier cas, le témoin 33 est constitué d'un système à ionisation de gaz tel qu'un néon, alimenté et commandé par le signal radiofréquence émis par l'antenne passive 30. Dans un deuxième cas, une deuxième antenne passive est associée à chacune des antennes passives 30 et le témoin lumineux 33 constitué par exemple d'une diode est alimenté et commandé par le signal radiofréquence émis par cette deuxième antenne passive. La deuxième antenne passive est elle-même commandée par l'antenne passive 30 à laquelle elle est associée.

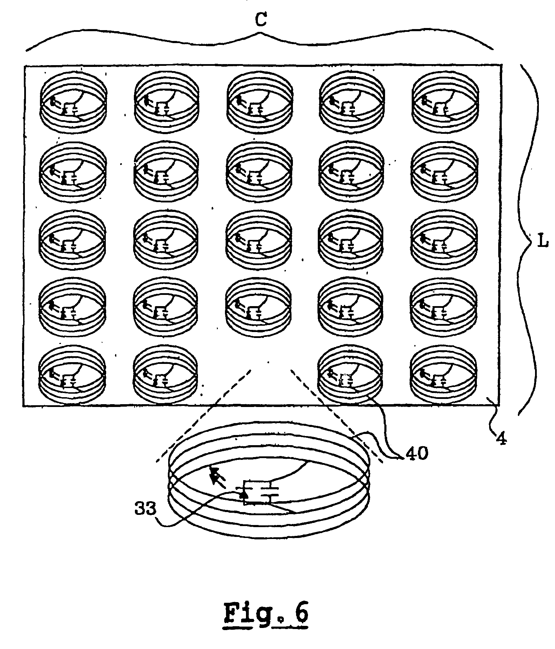

Dans ce dernier cas représenté figure 6, la matrice de visualisation 4 est alors constituée de LxC antennes passives 40, chacune de ces antennes passives étant associée à une diode 33. Un grossissement d'une antenne passive 40 est inclus dans cette figure 6 ; l'émission de lumière par la diode est représentée par les deux flèches.

Dans l'exemple qui vient d'être présenté, l'étiquette électronique est située entre le lecteur et l'antenne passive ; dans une autre configuration, l'antenne passive pourrait tout aussi bien être située entre le lecteur et l'étiquette électronique.

## Revendications

1. Dispositif d'antennes (30) pour système de lecture conjointe d' étiquettes électroniques (2) ; ce système comportant un lecteur (1) qui dispose d'au moins une antenne (10) de lecture des étiquettes électroniques (2) ; ce dispositif (30) comportant des antennes (30) passives et pour chaque antenne passive (30) au moins un moyen de commande ; **caractérisé en ce que** pour renforcer le couplage électromagnétique (M1) entre le lecteur (1) du système de lecture et les étiquettes électroniques, les antennes passives (30) sont organisées sous forme d'une matrice (3) comportant L lignes et C colonnes et repérées selon la matrice (3) par des coordonnées (i,j), i variant de 1 à L, j variant de 1 à C et **en ce que** chaque antenne passive est sélectionnée par deux moyens de commande (31ᵢ,32ⱼ), l'un pour les antennes passives (30) situées sur la ligne i, l'autre pour les antennes passives (30) situées sur la colonne j.

2. Dispositif selon la revendication 1, **caractérisé en ce que** chaque moyen de commande est constitué d'un interrupteur analogique à commande logique.

3. Dispositif selon l'une des revendications 1 à 3, **caractérisé en ce qu'**il comporte un témoin lumineux (33) associé à chaque antenne passive (30).

4. Dispositif selon la revendication 3, **caractérisé en ce que** le témoin lumineux (33) est connecté et commandé par les moyens de commande commandant ladite antenne passive (30).

5. Dispositif selon la revendication 4, **caractérisé en ce que** le témoin lumineux (33) est une diode.

6. Dispositif selon la revendication 5, **caractérisé en ce que** le témoin lumineux (33) est un système à ionisation de gaz alimenté et commandé par l'antenne passive (30) à laquelle il est associé.

7. Dispositif selon la revendication 3, **caractérisé en ce qu'**il comporte, associée à chaque antenne passive (30), une deuxième antenne passive (40) et **en ce que** le témoin lumineux (33) est alimenté et commandé par ladite deuxième antenne passive (40).

8. Dispositif selon la revendication 7, **caractérisé en ce que** le témoin lumineux (33) est une diode.

9. Système de lecture d'étiquettes électroniques (2), **caractérisé en ce qu'**il comporte un lecteur (1) disposant d'au moins une antenne (10) et un dispositif selon l'une des revendications 1 à 8.

## Patentansprüche

1. Antennenvorrichtung (30) für Lesesystem zusammen mit elektronischen Etiketten (2); wobei dieses System ein Lesegerät (1) umfasst, das wenigsten über eine Antenne (10) zum Lesen elektronischer Etiketten (2) verfügt; wobei diese Vorrichtung (30) passive Antennen (30) und für jede passive Antenne (30) wenigstens ein Steuermittel umfasst; **dadurch gekennzeichnet, dass** zur Verstärkung der elektromagnetischen Schaltung (M1) zwischen dem Lesegerät (1) des Lesesystems und den elektronischen Etiketten die passiven Antennen (30) in Form einer L Reihen und C Spalten umfassenden Matrize (3) organisiert und gemäß der Matrize (3) durch Koordinaten (i, j) gekennzeichnet sind, wobei i von 1 bis L variiert, j von 1 bis C variiert und dass jede passive Antenne durch zwei Steuermittel (31ᵢ, 32ⱼ)ausgewählt wird, das eine für die sich auf der Reihe i befindenden passiven Antennen (30), das andere für die sich auf der Spalte j befindenden passiven Antennen (30).

2. Vorrichtung gemäß Anspruch 1, **dadurch gekennzeichnet, dass** jedes Steuermittel durch einen analogen Schalter mit logischer Steuerung gebildet wird.

3. Vorrichtung gemäß Anspruch 1 bis 3, **dadurch gekennzeichnet, dass** sie eine jeder passiven Antenne (30) zugeordnete Leuchtanzeige (33) umfasst.

4. Vorrichtung gemäß Anspruch 3, **dadurch gekennzeichnet, dass** die Leuchtanzeige (33) durch die die genannte passive Antenne (30) steuernde Steuermittel angeschlossen und gesteuert wird.

5. Vorrichtung gemäß Anspruch 4, **dadurch gekennzeichnet, dass** die Leuchtanzeige (33) eine Diode ist.

6. Vorrichtung gemäß Anspruch 5, **dadurch gekennzeichnet, dass** die Leuchtanzeige (33) ein durch die passive Antenne (30), der es zugeordnet ist, versorgtes und gesteuertes System mit Gasionisation ist.

7. Vorrichtung gemäß Anspruch 3, **dadurch gekennzeichnet, dass** es eine jeder passiven Antenne (30) zugeordnete, zweite passive Antenne (40) umfasst und dass die Leuchtanzeige (33) durch die genannte zweite passive Antenne (40) versorgt und gesteuert wird.

8. Vorrichtung gemäß Anspruch 7, **dadurch gekennzeichnet, dass** die Leuchtanzeige (33) eine Diode ist.

9. Lesesystem elektronischer Etiketten (2), **dadurch gekennzeichnet, dass** es ein wenigstens über eine Antenne (10) und eine Vorrichtung gemäß Anspruch 1 bis 8 verfügendes Lesegerät (1) umfasst.

## Claims

1. An antenna device (30) for a system for the conjoint reading of electronic labels (2); this system comprising a reader (1) which has at least one antenna (10) for reading the electronic labels (2); this device (30) comprising passive antennae (30) and, for each passive antenna (30), at least one control means; **characterised in that**, in order to reinforce the electromagnetic coupling (M1) between the reader (1) of the reading system and the electronic labels, the passive antennae (30) are organised in the form of a matrix (3) comprising L rows and C columns and referenced according to the matrix (3) by coordinates (i,j), i varying from 1 to L, j varying from 1 to C, and **in that** each passive antenna is selected by two control means (31ᵢ, 32ⱼ), one for the passive antennae (30) situated on the row i, the other for the passive antennae (30) situated on the column j.

2. A device according to Claim 1, **characterised in that** each control means consists of a logic-control analogue switch.

3. A device according to one of Claims 1 to 3, **characterised in that** it comprises an indicator light (33) associated with each passive antenna (30).

4. A device according to Claim 3, **characterised in that** the indicator light (33) is connected and controlled by the control means controlling the said passive antenna (30).

5. A device according to Claim 4, **characterised in that** the indicator light (33) is a diode.

6. A device according to Claim 5, **characterised in that** the indicator light (33) is a gas ionisation system supplied and controlled by the passive antenna (30) with which it is associated.

7. A device according to Claim 3, **characterised in that** it comprises, associated with each passive antenna (30), a second passive antenna (40), and **in that** the indicator light (33) is supplied and controlled by the said second passive antenna (40).

8. A device according to Claim 7, **characterised in that** the indicator light (33) is a diode.

9. A system for reading electronic labels (2), **characterised in that** it comprises a reader (1) having at least one antenna (10) and a device according to one of Claims 1 to 8.
